# EUROPEAN PATENT APPLICATION

(11) **EP 4 371 405 A1**
(43) Date of publication of application: **22.05.2024**
(21) Application number: 23210471.1
(22) Date of filing: 16.11.2023
(51) Int. Cl.: A01K 43/00, B25J 15/12, B65B 23/08

(54) **SCANNING DEVICE FOR SCANNING EGGS**

(30) Priority: 17.11.2022 NL 2033547
(71) Applicant: Van de Ven Beheer B.V., 5521 DZ Eersel (NL)
(72) Inventor: VEN, van de, Dick Hendrikus Cornelis, 5521 NB Eersel (NL); STEMERDINK, Wouter Harmen Bert, 7103 XG Winterswijk (NL)
(74) Representative: Verhees, Godefridus Josephus Maria

(57) **Abstract**

An egg holder 1 for use in an MRI scanner has a carrier 3 and four upright springy curved plastic arms 5 attached to it, between which an egg can be clamped. Each arm 5 is U-shaped and is attached to the carrier 3 at its ends. When holding an egg, the arms 5 are together in contact with the egg in eight places. This provides a good balance between the size of the contact between the arms and the egg and the force that the arms 5 exert on the egg to correct the orientation of the egg during insertion. At the places 7 where the arms 5 come into contact with an egg, protrusions 9 are present on the inside 6 of the arms. The contact surface between the protrusions 9 and the egg is therefore small, so that there is hardly any disturbance of the magnetic fields in an MRI scanner.

## Description

### Technical field of the invention

The invention relates to a scanning device for scanning eggs comprising:
- an MRI scanner for scanning part of an egg, as well as
- a transport device or transporting eggs along and/or under the MRI scanner, which transport device is provided with:
   - a conveyor belt,
   - egg holders, and
   - moving means for moving the egg holders along the conveyor track.

In order to determine the sex of the embryo at the earliest possible stage before hatching, the egg is examined using an MRI scanner (Magnectic Resonance Imaging scanner). It is desirable to keep the time required for scanning an egg to determine the sex of the embryo as short as possible so that as many eggs as possible can be scanned by an MRI scanner per unit of time.

### Background of the invention

A scanning device according to the preamble of claim 1 is known from WO2019/151821A1. It has been found that the magnetic field generated within the scanning device by the MRI scanner is disturbed to such an extent that the image of the scanner can only be used to a limited extent.

### Summary of the invention

It is an object of the present invention to provide a scanning device for scanning eggs in which the magnetic field generated by the MRI scanner is less disturbed, so that the image of the scanner is usable. To this end, the scanning device according to the invention is characterized in that:
- the scanning device further comprises a housing with an input opening and an output opening through which the conveyor track extends and in which the MRI scanner is located, and
- each egg holder comprises a carrier and attached to it are at least three curved springy upright arms, which are arranged in a circle and between which an egg can be clamped, whereby when holding an egg ach arm is in contact with the egg only at one place.

It has been found that the disturbance of the magnetic field of the MRI scanner is caused by the contact surface between the egg holders and the eggs. By keeping this contact surface as small as possible, there is little disruption and the image from the MRI scanner is very usable.

It is noted that from WO88/03362A1 an egg holder per se is known which has three curved spring upright arms between which an egg can be clamped, whereby when holding an egg each arm is in contact with the egg only at one place. However, this document does not provide insight into whether this egg holder can be advantageously used to hold an egg in an MRI scanner.

An embodiment of the scanning device according to the invention is characterized in that when an egg is held by one of the egg holders, at the location where the arm comes into contact with an egg, a protrusion is present on the inside of the arm. The protrusion provides a distance between the arm and the shell of the egg. This means that the arms have an even less disruptive effect and there is even less disruption to the MRI scan image. In addition, these protrusions ensure that when an egg is pressed diagonally into the egg holder, the orientation of the egg is corrected during further pressing and the egg ends up straight in the holder.

The egg holder preferably comprises four resilient arms, including the three arms mentioned. This ensures that an egg is held better and the orientation of an egg inserted at an angle is better corrected to the upright position during further inserting.

A further embodiment of the scanning device according to the invention is characterized in that each arm of the egg holder is bent outwards from the carrier over a first part (i.e. away from the center of the circle) and then bent inwards over a second part. (i.e. towards the center of the circle), whereby when holding an egg the arm is in contact with the egg at the end of the second part. Due to this curved shape, each arm is only in contact with the egg in one place.

Yet another embodiment of the scanning device according to the invention is characterized in that each arm of the egg holders is U-shaped and is attached at its ends to the carrier, with each leg of the U-shape extending from the carrier is bent outwards over a first part and then bent inwards over a second part and then bent outwards again over a third part, whereby the third parts are attached to each other and whereby when holding an egg, the arms are in contact with the egg at the location of the transitions from the second to the third parts. This provides a good balance between the size of the contact between arms and egg and the force for correcting the orientation of the egg.

A further embodiment of the scanning device according to the invention is characterized in that the egg holder comprises a base that is clicked onto the carrier on the side of the carrier remote from the arms, whereby between the bottom of the carrier and the top of the base from one side up to the opposite side there is a passage through which a conveyor belt can be present. This egg holder is therefore suitable for use in a transport device that is provided with a conveyor belt.

It is desirable to keep the passage through an MRI scanner as small as possible so that the magnetic field generating coils are as close as possible to the eggs to be scanned and therefore have to create a less powerful magnetic field. This allows scanning of an egg to be carried out in a shorter time and therefore more eggs can be scanned per unit of time. By keeping the egg holder compact and arranging it directly on the conveyor belt, when used in a transport device using an MRI scanner, only a small passage through the MRI scanner is required, so that the magnetic field generating coils can be arranged close to the eggs to be scanned.

If the magnetic field generating coils are close to the eggs to be scanned, it is sufficient to scan only a small part of the egg (no more than strictly necessary to determine the sex), so that the time required for scanning an egg can even be shorter.

The base is preferably provided with upright guide pins and the carrier is preferably provided with guide holes. The guide pins and guide holes ensure that the holder slides onto the base without exerting an obliquely directed load on the click mechanism. When the base and the carrier click together, the greatest forces are exerted on these upright guide pins. This allows the click mechanism to be light and compact, so that the conveyor belt with the egg holder clicked onto it is also compact and only requires a small passage. Preferably there are four guide pins and four guide holes.

A further embodiment of the scanning device according to the invention is characterized in that the transport device comprises a conveyor belt on which a number of egg holders are arranged.

Preferably, there are holes in the conveyor belt at the location of the egg holders, the holes are configured in such a way that when an egg is inserted, the point of the egg ends up in one of these holes. It has to be possible to transport eggs of varying sizes through the MRI scanner. The holes in the conveyor belt provide extra space for large eggs and therefore limit the installation size of the conveyor belt in an MRI machine. In addition, the soft property of the conveyor belt has a dampening effect when placing an egg.

A further embodiment of the scanning device according to the invention is characterized in that there is a recess in the top side of the carrier of each egg holder and the transport device comprises a stationary guide element that is positioned obliquely with respect to the conveyor belt and where, during operation, the conveyor belt with thereon the carriers are moved underneath, whereby the carrier moves under the guide element and the guide element ends up in the recess, causing the eggs in the egg holders with the bottom to come into contact with the guide element and to be pressed by the guide element out of the egg holders. As a result, no moving parts are required to remove the eggs from the egg holders and a robust and cheap solution for unloading the eggs is obtained.

### Brief description of the drawings

The invention will be further elucidated below on the basis of drawings. These drawings show an embodiment of the scanning device according to the present invention. In the drawings:
Figure 1 schematically shows an embodiment of the scanning device according to the invention;
Figure 2 shows the egg holder of the scanning device shown in Figure 1;
Figure 3 shows the egg holder shown in figure 2 with an egg therein;
Figure 4 shows the conveyor belt during the installation of an egg holder;
Figure 5 shows the conveyor belt shown in Figure 4 with egg holders attached thereto;
Figure 6 shows a part of the transport device at the location where the eggs are removed from the egg holders; and
Figure 7 shows a detail of the transport device shown in figure 6.

### Detailed description of the drawings

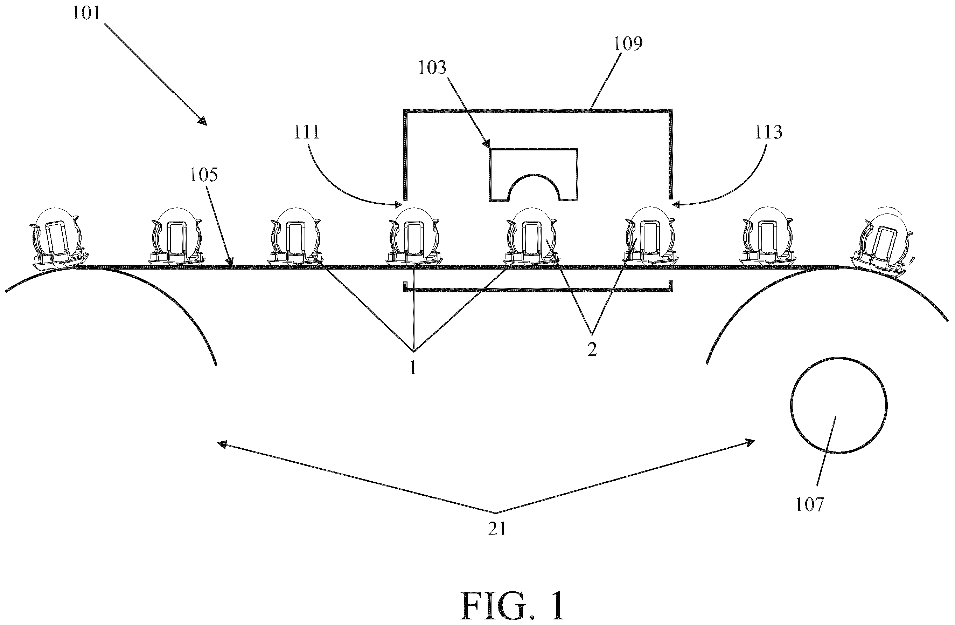

Figure 1 shows schematically an embodiment of the scanning device according to the invention. The scanning device 101 is provided with a housing 109 with an input opening 111 and an output opening 113 through which a conveyor track 105 extends. Inside the housing 109 there is an MRI scanner 103 for scanning part of an egg 2.

The scanning device 101 is further provided with a transport device 21 for transporting eggs 2 along the MRI scanner 103 or under the MRI scanner 103. This transport device 21 is provided with a transport track 105 along which the eggs 2 are transported. To transport the eggs, a conveyor belt extends along the conveyor track. Egg holders 1 are attached to this conveyor belt. The transport device 21 further has moving means 107, formed by an electric motor, for moving the conveyor belt with the egg holders 1 present thereon.

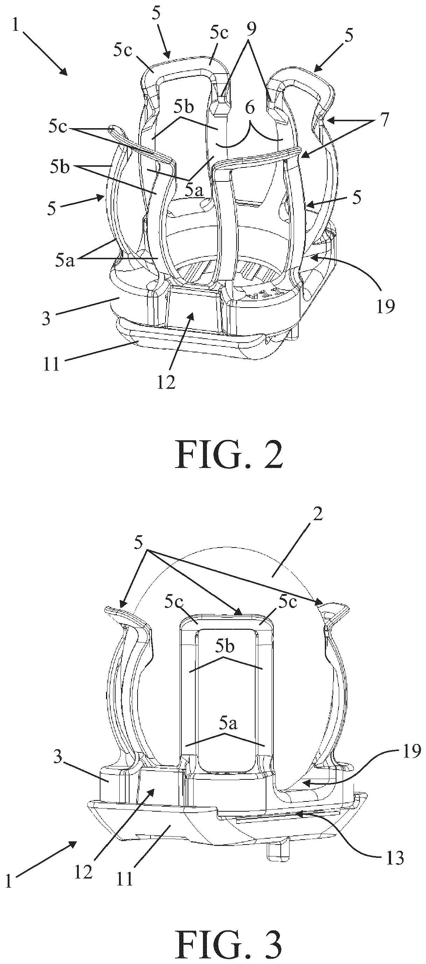

Figure 2 shows the egg holder in perspective. The egg holder 1 has a carrier 3 and four upright springy curved plastic arms 5 attached to it. The arms 5 are arranged in a circle and an egg can be clamped between the arms 5. The arms are grouped in two pairs, with the distance between the pairs being greater than the distance between the arms of a pair. There is a recess 19 in the carrier between the pairs, through which a guide element can be inserted under an egg to push the egg out of the egg holder.

Each arm 5 is U-shaped and is attached to the carrier 3 with the ends of the legs of the U-shape. Each leg of the U-shape is bent outwards from the carrier 3 over a first part 5a and then bent inwards over a second part 5b. Following the second part, each leg has a third part 5c that is bent outwards from the second part 5b. The third parts 5c of the two legs of each arm are attached to each other.

When holding an egg, the arms 5 are in contact with the egg at the location of the transitions 7 from the second to the third parts 5a, 5b. The four arms 5 are therefore in contact with the egg at eight places when an egg is present in the egg holder 1. This provides a good balance between the size of the contact between the arms and the egg and the force that the arms 5 exert on the egg to correct the orientation of the egg during insertion.

At the places 7 where the arms 5 come into contact with an egg, protrusions 9 are present on the inside 6 of the arms. The contact surface between the protrusions 9 and the egg is therefore small, so that there is hardly any disturbance of the magnetic fields. The protrusions 9 ensure that when an egg is pressed obliquely into the egg holder, the orientation of the egg is corrected during further pressing and the egg ends up straight in the egg holder.

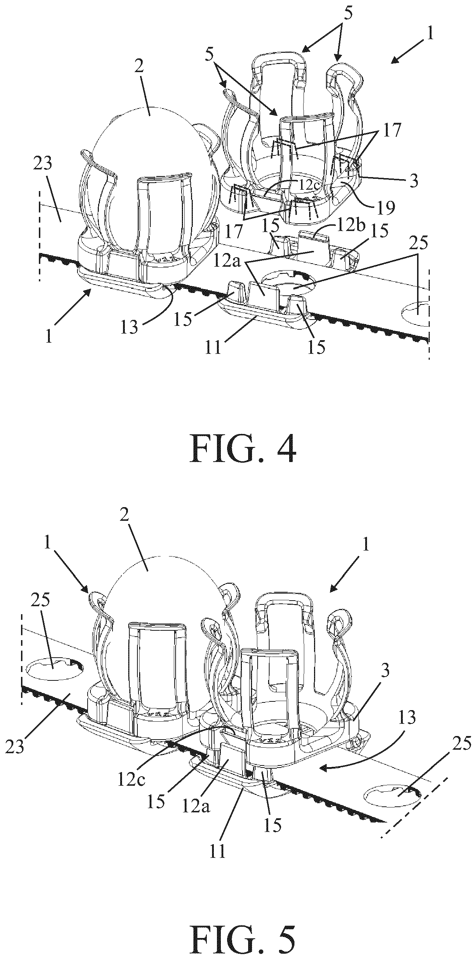

In order to attach the egg holder 1 to a conveyor belt, the carrier is placed on the conveyor belt and a base 11 is clicked onto the carrier on the underside of the carrier 3 remote from the arms. The conveyor belt is clamped between the carrier and the base. The click mechanism 12 that enables the clicking into place has two springy arms attached to the base 11 and provided with hooks that hook onto the edges on the back of the carrier. This will be explained in more detail below with reference to Figure 4.

Figure 3 shows egg holder 1 containing an egg 2. When inserting the egg 2 in the egg holder, the egg is pressed from above between the spring arms 5. The egg 2 comes into contact with the third parts 5c of the arms 5, as a result of which the arms are pressed outward. When the egg is further inserted, the arms spring back and the egg is enclosed by the first and second parts 5a and 5b of the arms. Between the bottom of the carrier 3 and the top of the base 11 there is a passage 13 through which the conveyor belt is located if the egg holder is clicked onto a conveyor belt.

Figure 4 shows a conveyor belt 23 with an egg holder -with an egg in it-mounted thereon and a further egg holder during installation on the conveyor belt. The egg holders 1 are arranged on the conveyor belt 23 at the location of holes 25 in the conveyor belt 23. These holes 25 are intended to create space for the eggs so that the egg holder 1 with an egg 2 in it takes up as little space as possible. The eggs 2 can extend with one end partially through the holes 25 so that they extend less high from the conveyor belt. The part of the conveyor belt 23 around a hole 25 has a damping effect during the insertion of an egg.

The base 11 is provided with four upright guide pins 15 and the carrier 3 is provided with four corresponding guide holes 17. When mounting the egg holder 1 on the conveyor belt 23, the base 11 is brought against the conveyor belt 23 from below, with the guide pins 15 next to the conveyor belt 23 raising upwards. Then the carrier 3 with therein the guide holes 17 is slid over the guide pins 15 until it clicks into place on the base 11.

The click mechanism 12 has two springy arms 12a attached to the base 11 and provided with hooks 12b (protruding ridges), as well as protruding edges 12c on the carrier 3, behind which the hooks 12b engage when clicking. Due to the presence of the guide pins the click mechanism is not loaded diagonally and can therefore be made light and compact. For clarification, figure 5 shows the situation in which the carrier 3 has been partly slid over the guide pins 15 of the base 11.

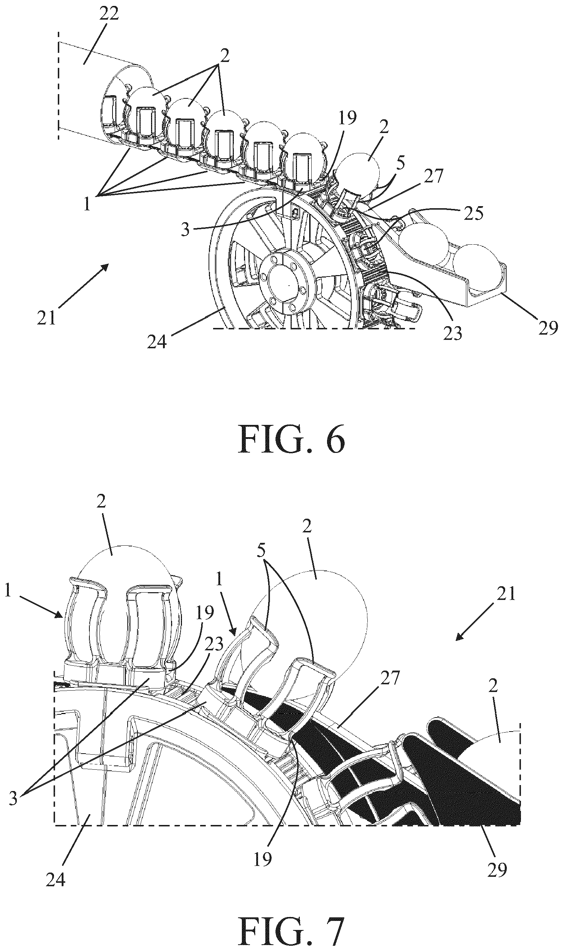

Figure 6 shows part of the transport device according to the invention at the location where the eggs are removed from the egg holders. The conveyor belt 23 of the transport device 21 with the egg holders 1 clicked into place at the holes 25 leaves a guide tube 22 and is wrapped around a drive wheel 24. At the location where the conveyor belt 23 bends downwards, a wedge-shaped guide element 27 is present at a small distance above the conveyor belt 23, in such a way that the carriers 3 can just pass underneath. While passing the egg holders 1, the carriers 3 with the recesses 19 are moved under the free end of the guide element 27. This end of the guide element 27 ends up under the eggs 2 and the eggs are pushed over the guide element 27. The eggs are thereby moved upwards between the arms 5 and guided out of the egg holders 1, after which the eggs end up in a guide 29 and are moved further. This wedge-shaped stationary articulating element means that no moving parts are required to remove the eggs from the egg holders. Figure 7 shows a detail of the transport device in which the wedge shape of the guide 27 is clearly visible.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Scanning device (101) for scanning eggs (2) comprising:
- an MRI scanner (103) for scanning part of an egg (2), as well as
- a transport device (21) for transporting eggs (2) along and/or under the MRI scanner (103), which transport device (21) is provided with:
- a conveyor belt (105),
- egg holders (1), and
- moving means (107) for moving the egg holders (1) along the conveyor track (105),
**characterized in that**:
- the scanning device further comprises a housing (109) with an input opening (111) and an output opening (113) through which the conveyor track (105) extends and in which the MRI scanner (103) is located, and
- each egg holder (1) comprises a carrier (3) and attached to it are at least three curved springy upright arms (5), which are arranged in a circle and between which an egg (2) can be clamped, whereby when holding an egg (2) each arm (5) is in contact with the egg (2) only at one place (7).

2. Scanning device according to claim 1, **characterized in that** when an egg (2) is held by one of the egg holders, at the location (7) where the arm (5) comes into contact with an egg (2), a protrusion (9) is present on the inside (6) of the arm (5).

3. Scanning device according to claim 1 or 2, **characterized in that** each egg holder (1) comprises four resilient arms (5), including the said three arms.

4. Scanning device according to claim 1, 2 or 3, **characterized in that** each arm (5) of the egg holders is bent outwards from the carrier (3) over a first part (5a) and then is bent inwards over a second part (5b), whereby when holding an egg (2), the arm (5) is in contact with the egg (2) at the end of the second part (5a) remote from the first part (5a).

5. Scanning device according to claim 1, 2 or 3, **characterized in that** each arm (5) of the egg holders is U-shaped and is attached at its ends to the carrier (3), with each leg of the U-shape extending from the carrier (3) is bent outwards over a first part (5a) and then bent inwards over a second part (5b) and then bent outwards again over a third part (5c), whereby the third parts (5c) are attached to each other and whereby when holding an egg (2), the arms (5) are in contact with the egg (2) at the location of the transitions from the second to the third parts (5a, 5b).

6. Scanning device according to any one of the preceding claims, **characterized in that** each egg holder comprises a base (11) that is clicked onto the carrier on the side of the carrier (3) remote from the arms, with between the bottom of the carrier and the top of the base from one side to the opposite side there is a passage (13) through which a conveyor belt (23) can be present.

7. Scanning device according to any one of the preceding claims, **characterized in that** the base (11) of each egg holder is provided with four upright guide pins (15) and the carrier (3) is provided with four guide holes (17).

8. Scanning device (21) according to any one of the preceding claims, **characterized in that** the transport device comprises a conveyor belt (23) on which the egg holders (1) are present.

9. Scanning device according to claim 8, **characterized in that** there are holes (25) in the conveyor belt (23) at the location of the egg holders (1), the holes are configured in such a way that when an egg (2) is inserted, the point of the egg ends up in one of these holes (25).

10. Scanning device according to claim 8 or 9, **characterized in that** there is a recess (19) in the top side of the carrier (3) of each egg holder (1) and the transport device (21) comprises a stationary guide element (27) that is arranged obliquely with respect to the conveyor belt (23) and where during operation the conveyor belt (23) with the carriers (1) on it moves underneath, whereby the carrier (3) moves under the guide element (27) and the guide element (27) ends up in the recess (19), causing the eggs (2) in the egg holders (1) with the bottom to come into contact with the guide element (27) and to be pressed by the guide element out of the egg holders (1).
